(19) Europäisches Patentamt
European Patent Office
Office européen des brevets

(11) **EP 2 646 494 B1**

(12) **EUROPÄISCHE PATENTSCHRIFT**

(45) Veröffentlichungstag und Bekanntmachung des Hinweises auf die Patenterteilung:
**22.10.2014 Patentblatt 2014/43**

(21) Anmeldenummer: **11788821.4**

(22) Anmeldetag: **28.11.2011**

(51) Int Cl.:
**C08G 69/48** (2006.01)

(86) Internationale Anmeldenummer:
**PCT/EP2011/071124**

(87) Internationale Veröffentlichungsnummer:
**WO 2012/072548 (07.06.2012 Gazette 2012/23)**

(54) **VERFAHREN ZUR QUERVERNETZUNG VON POLYAMIDEN**

CROSSLINKED POLYAMIDES

POLYAMIDES À RÉTICULATION TRANSVERSALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2010 EP 10193583**

(43) Veröffentlichungstag der Anmeldung:
**09.10.2013 Patentblatt 2013/41**

(73) Patentinhaber: **BASF SE**
**67056 Ludwigshafen (DE)**

(72) Erfinder:
• **DESBOIS, Philippe**
**68535 Edingen-Neckarhausen (DE)**
• **SCHERZER, Dietrich**
**67433 Neustadt (DE)**
• **WOLLNY, Andreas**
**67251 Freinsheim (DE)**
• **RADTKE, Andreas**
**68161 Mannheim (DE)**

(56) Entgegenhaltungen:
**WO-A1-2011/144602    WO-A2-2010/011924
DE-A1- 1 420 241**

**Beschreibung**

Die vorliegende Erfindung betrifft ein Verfahren zur Quervernetzung von Polyamiden.

Quervernetzte Polyamide sind nicht via Standard Polymerisation Fahrweise herstellbar. Da die Polymerisationsverfahren lange Verweilzeiten als auch hohe Temperaturen erfordern, können solche Polymere wegen der sehr hohen Viskosität nicht mehr ausgetragen werden und würden derartig betriebene Anlagen sehr schnell verstopfen.

Die einzige Möglichkeit quervernetzte Polyamide zu erhalten, ist die Nutzung der sogenannten Nachquervernetzungsfahrweise wo ein Additiv während der Polymerisation oder der Kompoundierung zugegeben wird. Nach Spritzguß des Polyamidteils wird via eines externen Stimulus durch Strahlung dieses Additiv angeregt, damit es mit der Polyamid Kette reagiert, z.B. um diese zu vernetzen.

Die anionische Polymerisation von Polyamid 6 ist bekannt und kommerziell verwendet. Da wird die Polymerisation direkt in einer Form durchgeführt. Weil die Polymerisation sehr schnell ist, kann man die bei tiefere Temperatur durchführen (80-200°C). Die Nutzung vom Monomer anstatt Polymer um die Form zu füllen erlaubt höhere Füllgrade zu erreichen (80-90%). Solche Polymerisation erfordert die Addition eines Katalysators (Na, K Derivate) und erzeugt lineare Polyamidketten (Thermoplasten).

Aus der DE-A-14 20 241 ist ein Verfahren zur Herstellung von linearen Polyamidketten durch Addition von KOH als Katalysator und 1,6-bis-(N,N-dibutylureido)-hexan als Aktivator durch sog. anionische Polymerisation von Lactamen bekannt.

Aus Polyamide, Kunststoff Handbuch Vol. ¾, ISBN 3-446-16486-3, 1998, Carl Hanser Verlag, 49-52 ist die aktivierte anionische Lactampolymerisation bekannt. Darin wird die Verwendung von Na-Caprolactamat als Katalysator kombiniert mit Acyllactamderivaten zur Herstellung von linearen Polyamiden beschrieben.

Aus Macromolecules, Vol. 32, No.23 (1999) Seite 7726 ist die aktivierte anionische Lactampolymerisation bekannt. Darin wird die Verwendung von Natriumcaprolactamat als Katalysator kombiniert mit N,N'-Hexamethylen-bis-(2-oxo-1-azepanylcarboxamid) zur Herstellung von linearen Polyamiden beschrieben.

Das erzeugte Polymer wird linear, weshalb es die inhärenten Nachteile von Thermoplasten gegenüber Duroplasten hat: höheres Kriechen, geringere Lösungsmittelbeständigkeit gegenüber organischen Lösungsmitteln.

Aus Charlesby, A., 1953, Nature 171, 167 und Deeley, C. W., Woodward, A.E., Sauer, J.A., 1957, J. Appl. Phys. 28, 1124-1130 ist die Bestrahlung zur Quervernetzung von spritzgegossenen Thermoplasten wie Polyamiden bekannt.

Nachteilig an diesem Verfahren ist die Nachvernetzung mit einem Strahlungsapparat.

Der vorliegenden Erfindung lag daher die Aufgabe zugrunde, den zuvor genannten Nachteilen abzuhelfen.

Demgemäß wurde ein neues und verbessertes Verfahren zur Quervernetzung von Polyamiden gefunden, welches dadurch gekennzeichnet ist, dass man eine Verbindung der allgemeinen Formel $R^1R^2C=CR^3\text{-}X$, in der $R^1$, $R^2$ und $R^3$ unabhängig voneinander für Wasserstoff oder einen organischen Rest steht, mit einem Lactam A bei einer Temperatur von (-30) bis 150°C umsetzt und anschließend mit einem Lactam B, einem Katalysator und einem Aktivator bei einer Temperatur von 40 bis 240°C umsetzt.

Das erfindungsgemäße Verfahren kann wie folgt durchgeführt werden:

Man kann die Verbindung der allgemeinen Formel $R^1R^2C=CR^3\text{-}X$ mit einem Lactam A bei einer Temperatur von (-30) bis 150°C, bevorzugt 0 bis 80°C, besonders bevorzugt 20 bis 50°C und einem Druck von 0,1 bis 10 bar, bevorzugt 0,5 bis 5 bar, besonders bevorzugt Atmosphärendruck (Normaldruck) in einem Lösungsmittel A umsetzen. Das Umsetzungsprodukt wird mit oder ohne weitere Reinigung, bevorzugt nach Entfernung des Lösungsmittels A im Vakuum bei 0,001 bis 0,5 bar, bevorzugt 0,01 bis 0,3 bar, besonders bevorzugt 0,1 bis 0,2 bar und einer Temperatur von 5 bis 200°C, bevorzugt 10 bis 180°C, besonders bevorzugt 20 bis 150°C, mit einem Lactam B, einem Katalysator und einem Aktivator gemischt und bei einer Temperatur von 40 bis 240°C, bevorzugt 70 bis 180°C, besonders bevorzugt 100 bis 170°C und einem Druck von 0,1 bis 10 bar, bevorzugt 0,5 bis 5 bar, besonders bevorzugt Atmosphärendruck (Normaldruck), insbesondere ohne Lösungsmittel umgesetzt.

Die Substituenten $R^1$, $R^2$ und $R^3$ und X in der allgemeinen Formel $R^1R^2C=CR^3\text{-}X$ haben folgende Bedeutungen:

$R^1$, $R^2$ und $R^3$
unabhängig voneinander

- Wasserstoff oder einen organischen Rest, bevorzugt Wasserstoff.

Als organische Reste werden folgende Reste bevorzugt:

- $C_1$- bis $C_8$-Alkyl, bevorzugt $C_1$- bis $C_4$-Alkyl wie Methyl, Ethyl, n-Propyl, iso-Propyl, n-Butyl, iso-Butyl, sec.-Butyl und tert.-Butyl, besonders bevorzugt $C_1$- bis $C_2$-Alkyl wie Methyl und Ethyl, insbesondere Methyl,
- ein bis dreifach durch $C_1$- bis $C_4$-Alkyl wie Methyl, Ethyl, n-Propyl, iso-Propyl, n-Butyl, iso-Butyl, sec.-Butyl und tert.-Butyl, besonders bevorzugt $C_1$- bis$C_2$-Alkyl wie Methyl und Ethyl, insbesondere Methyl, Amino (-$NH_2$), Aryl wie Phenyl, -NC=O, -COCl, -COBr, -COOH und Carbonsäureanhydrid,
- Aryl wie Phenyl und Naphthyl,
- Carbonyl und
- Vinyl.

X

- -NC=O, -COCl, -COBr, -COOH, Carbonsäureanhydrid und -$COOR^4$, wobei $R^4$ für $C_1$-bis $C_{12}$-Alkyl, bevorzugt $C_1$- bis $C_4$-Alkyl wie Methyl, Ethyl, n-Propyl, iso-Propyl, n-Butyl, iso-Butyl, sec.-Butyl und tert.-Butyl, besonders bevorzugt $C_1$- bis $C_2$-Alkyl wie Methyl und Ethyl, insbesondere Methyl steht, bevorzugt -NC=O und -COCl, besonders bevorzugt -COCl.

Als Verbindung der allgemeinen Formel $R^1R^2C=CR^3$-X eignen sich beispielsweise Butenoylchlorid, Propenoylchlorid, 2-Propenoylbromid, Vinylisocyanat und Acrylsäure, bevorzugt 2-Propenoylchlorid und 2-Propenoylbromid, besonders bevorzugt 2-Propenoylchlorid.

Als Lactam A eignen sich aminosubstituierte Lactame wie Aminocaprolactam, Aminopiperidon, Aminopyrrolidon, Aminolauryllactam oder deren Mischungen, bevorzugt Aminocaprolactam, Aminopyrrolidon oder deren Mischungen, besonders bevorzugt Aminocaprolactam.

Als Lösungsmittel A eignen sich Dimethylsulfoxid, Methylchlorid, Methylenchlorid, Dioxan, Tetrahydrofuran, Acetonitril, Chloroform, Tetrahydropyran, N-Methylpyrrolidon, N-Ethylpyrrolidon, Dimethylformamid, Caprolactam, Lauryllactam, Methanol, Ethanol, n-Propanol, isoPropanol oder deren Gemische, bevorzugt Dimethylsulfoxid, Acetonitril, Chloroform , Methylchlorid, Methylenchlorid, Tetrahydrofuran oder deren Gemische, besonders bevorzugt Acetonitril, Chloroform.

Als Lactam B eignen sich Caprolactam, Piperidon, Pyrrolidon, Lauryllactam oder deren Mischungen, bevorzugt Caprolactam, Lauryllactam oder deren Mischungen, besonders bevorzugt Caprolactam oder Lauryllactam. Neben Copolymeren aus verschiedenen Lactamen als Monomere ist es auch möglich ein Lacton wie Caprolacton als Comonomer einzusetzten. Die Menge eines Lactons als Comonomer sollte dabei in der Regel 40 Gew.-% bezogen auf das Gesamtmonomer nicht überschreiten, bevorzugt beträgt der Anteil an Lacton nicht mehr als 10 Gew.-% bezogen auf das Gesamtmonomer, besonders bevorzugt wird kein Lacton als Comonomer verwendet.

Die anionische Polymerisation wird in Gegenwart eines Aktivators durchgeführt werden. Unter einem Aktivator wird ein durch elektrophile Reste N-substituiertes Lactam oder eine Vorstufe davon verstanden, die zusammen mit einem Lactam in situ ein durch elektrophile Reste N-substituiertes Lactam bildet. Die Aktivatormenge definiert die Anzahl der wachsenden Ketten, da er das Anfangsglied in der Reaktion ist. Als elektrophile Reste eignen sich Reste, die aus Umsetzungen von -NC=O, -COCl, -COBr oder Carbonsäureanhydriden mit Lactamen entstehen.

Als Aktivator eignen sich aliphatische Diisocyanate wie Butylendiisocyanat, Hexamethylendiisiocyanat, Octamethylendiisocynat, Decamethylendiisocyanat, Undodecamethylendiisocyanat, Dodecamethylendiisocyanat, als auch aromatische Diisocyanate wie Toluyldiisocyanat, Isophorondiisocyanat, 4,4'-Methylenbis(phenyl-isocyanat), 4,4'-Methylenbis(cyclohexylisocyanat) oder Polyisocyanate wie Isocyanurate von Hexamethylendiisocyanat, Basonat® HI 100 der BASF SE, Allophanate wie Ethylallophanat oder deren Mischungen, bevorzugt Hexamethylendiisiocyanat, Isophorondiisocyanat, besonders bevorzugt Hexamethylendiisiocyanat. Die Diisocyanate können durch Monoisocyanate ersetzt werden.

Alternativ eignen sich als Aktivator Disäurehalogenid, aliphatische Disäurehalogenide wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid als auch aromatische Disäurehalogenid wie Toluyldisäurechlorid, Toluylmethylendisäurebromid, Isophorondisäurechlorid, Isophorondisäurebromid, 4,4'-Methylenbis(phenylsäurechlorid, 4,4'-Methylenbis(phenylsäurebromid, 4,4'-Methylenbis(cyclohexylsäurechlorid, 4,4'-Methylenbis(cyclohexylsäurebromid oder deren Mischungen, bevorzugt Hexamethylendisäurechlorid, Hexamethylendisäurebromid oder deren Mischungen, besonders bevorzugt Hexamethylendisäurechlorid. Die Disäurehalogenide können durch Monosäurehalogenide ersetzt werden.

Die anionische Polymerisation wird in Gegenwart eines Katalysators durchgeführt. Derartige Katalysatoren sind beispielsweise aus Polyamide, Kunststoff Handbuch Vol. ¾, ISBN 3-446-16486-3, 1998, Carl Hanser Verlag, 49-52 bekannt. Darin wird u.a. die Verwendung von Na-Caprolactamat als Katalysator kombiniert mit Acyllactamderivaten beschrieben.

Als Katalysatoren eignen sich Natriumcaprolactamat, Kaliumcaprolactamat, Bromidmagnesiumcaprolactamat, Chloridmagnesiumcaprolactamat, Magnesiumbiscaprolactamat, Natriumhydrid, Natrium, Natriumhydroxid, Natriummethanolat, Natriumethanolat, Natriumpropanolat, Natriumbutanolat, Kaliumhydrid, Kalium , Kaliumhydroxid, Kaliummethanolat, Kaliumethanolat, Kaliumpropanolat, Kaliumbutanolat, bevorzugt Natriumhydrid, Natrium, Natriumcaprolactamat, besonders bevorzugt Natriumcaprolactamat. (Bruggolen® C 10, eine Lösung aus 18 Gew.-% Natriumcaprolactamat in Caprolactam).

Das Molverhältnis von Verbindung der allgemeinen Formel $R^1R^2C=CR^3$-X zum Lactam A kann in weiten Grenzen variiert werden, beträgt in der Regel 0,01:1 bis 100:1, bevorzugt 0,1:1 bis 10:1, besonders bevorzugt 0,5:1 bis 1,5:1.

Das Molverhältnis vom Lösungsmittel A zur Verbindung der allgemeinen Formel $R^1R^2C=CR^3$-X kann in weiten Grenzen variiert werden, beträgt in der Regel 200:1 bis 0:1, bevorzugt 100:1 bis 0,5:1, besonders bevorzugt 50:1 bis 1:1.

Das Molverhältnis vom Lösungsmittel A zum Lactam A kann in weiten Grenzen variiert werden, beträgt in der Regel 200:1 bis 0,5:1, bevorzugt 50:1 bis 1:1, besonders bevorzugt 10:1 bis 1:1.

Das Molverhältnis von Lactam B zum Lactam A kann in weiten Grenzen variiert werden, beträgt in der Regel 1:1 bis 10.000:1, bevorzugt 5:1 bis 5.000:1, besonders bevorzugt 10:1 bis 3.000:1.

Das Molverhältnis von Lactam B zum Katalysator kann in weiten Grenzen variiert werden, beträgt in der Regel 1 : 1 bis 10000 : 1, bevorzugt 10 : 1 bis 1000 : 1, besonders bevorzugt 20 : 1 bis 300 : 1.

Das Molverhältnis von Aktivator zum Katalysator kann in weiten Grenzen variiert werden, beträgt in der Regel 0,01 : 1 bis 10 : 1, bevorzugt 0,1:1 bis 5 : 1, besonders bevorzugt 0,2 : 1 bis 2 : 1.

Nach dem erfindungsgemäßen Verfahren lassen sich quervernetzten Polyamide von beliebigen Polyamiden beispielsweise Polyamid-3, Polyamid-4, Polyamid-5, Polyamid-6, Polyamid-7, Polyamid-8, Polyamid-9/, Polyamid-10, Polyamid-11, Polyamid-12, Polyamid-13, Polyamid-14, Polyamid-15, Polyamid-16, Polyamid-17 und Polyamid-18 oder Co-Polyamiden wie Polyamid-4/6, Polyamid-5/6, Polyamid-4/5, Polyamid-6/7, Polyamid-6/8, Polyamid-6/9, Polyamid-6/10, Polyamid-6/12, Polyamid-4/12, Polyamid-4/10, Polyamid-5/10, Polyamid-5/12, bevorzugt Polyamid-6, Polyamid-12, Polyamid-4/6, Polyamid-5/6, Polyamid-4/12, Polyamid-5/12, besonders bevorzugt Polyamid-6 und Polyamid-12, insbesondere Polyamid-6 herstellen.

Die erfindungsgemäß hergestellten quervernetzten Polyamide eigenen sich als Material zur Herstellung von Windrädern, wie Rotorblätter und Verkleidung von Windradtürmen, Autoteilen wie Kotflügel, Stoßstangen, Stoßdämpfer, Verkleidung von Rahmen, Armaturenbretter, den Innenraum von Fahrgastzellen.

Beispiele

Herstellung der Ausgangsstoffe

Beispiel I

Herstellung von N-(2-Oxo-azepan-3-yl)-propenamid

8 ml (98,46 mmol) Acryloylchlorid und 12,8 g (100 mmol) α-Amino-ε-caprolactam (herstellbar nach WO-A-2005/123 669, Beispiel 7) wurden in 300 ml wasserfreiem Chloroform unter Stickstoff in einem geschlossenen Rundkolben 1 h bei 40°C gerührt, das Chloroform bei 100 mbar und 40°C verdampft, das resultierende Pulver 2 mal mit jeweils mit 70 ml Acetonitril bei 70°C gelöst, auf Raumtemperatur gekühlt und das kristalline Produkt abfiltriert. Man erhielt 13,7 g (75,27 mmol) (76,4%) Pulver.

Beispiele 1 bis 4 und Vergleichsbeispiel A bis C

Synthese von Polyamid-6 durch anionische Polymerisation von ε-Caprolactam

Alle Polymerisationsreaktionen wurden bei 140°C unter Rühren in trockener Argonatmosphäre in einem 50-ml-Glaskalorimeterreaktor, der mit einem fettfreien Rotaflo-Hahn verschlossen und mit einem Thermoelement und einem Glasrohr mit Zerschlagventil versehen war, durchgeführt.

Beispiel 1

5,2 g (49,1 mmol) ε-Caprolactam, 1 g (5,49 mmol) N-(2-Oxo-azepan-3-yl)-propenamid und 0,9 g (1,127 mmol) Bruggolen® C 10 (17% w/w ε-Caprolactamat in ε-Caprolactam) wurden in den Reaktor bei 140°C gemischt und 0,41 g (0,83 mmol) Bruggolen® C20 (80% w/w blockiertes Diisocyanat in ε-Caprolactam) in das Glasrohr mit Zerschlagventil und bei 140°C temperiert. Nach Erreichen der 140°C wurde das schmelzflüssige Bruggolen® C20 mit Hilfe eines Zerschlagventilsystems in die schmelzflüssige Mischung injiziert und die Polymerisation 20 Minuten stehen gelassen und anschließend durch Abkühlen des Reaktors in Wasser (10°C) gequencht. Man erhielt 7,5 g Polyamid 6 als Feststoff.

1 g des erhaltenen Polymers wurde unter Rühren in 50 ml Hexafluorisopropanol (HFIP) bei Raumtemperatur gegossen. Nach 10 h wurde eine gelartige Struktur erhalten. Nach Filtration wurde das Polymer auf dem Filter zurück gewonnen, wohingegen in dem Filtrat nach Eindampfen kein Polymer nachgewiesen wurde, woraus hervorgeht, dass das PA6 in HFIP unlöslich und vollständig vernetzt war. Man erhielt 0,97 g als Feststoff.

Die Kristallinität wurde durch DSC Messung mit dem Gerät Q 2000 der Firma Waters GmbH durchgeführt. Die Einwaage betrug 8,5 mg, die Heiz- bzw. Kühlrate 20 K/min. Gemessen wurde die Probe nach ISO 11357-7. Demnach betrug die Kristallinität 0%.

Der Quellungsgrad (Degree of swelling) des erhaltenen Polyamide betrug 2.

Beispiel 2

5,94 g (52,5 mmol) ε-Caprolactam, 0,25 g (1,37 mmol) N-(2-Oxo-azepan-3-yl)-propenamid und 0,9 g (1,127 mmol) Bruggolen® C 10 (17% w/w ε-Caprolactamat in ε-Caprolactam) wurden in den Reaktor bei 140°C gemischt und 0,41 g (0,83 mmol) Bruggolen® C20 (80% w/w blockiertes Diisocyanat in ε-Caprolactam) in das Glasrohr mit Zerschlagventil und bei 140°C temperiert. Nach Erreichen der 140°C wurde das schmelzflüssige Bruggolen® C20 mit Hilfe eines Zerschlagventilsystems in die schmelzflüssige Mischung injiziert und die Polymerisation 20 Minuten stehen gelassen und anschließend durch Abkühlen des Reaktors in Wasser (10°C) gequencht. Man erhielt 7,6 g Polyamid 6 als Feststoff. 1 g des erhaltenen Polymers wurde unter Rühren in 50 ml Hexafluorisopropanol (HFIP) bei Raumtemperatur gegossen. Nach 10 h wurde eine gelartige Struktur erhalten. Nach Filtration wurde das Polymer auf dem Filter zurück gewonnen, wohingegen in dem Filtrat nach Eindampfen kein Polymer nachgewiesen wurde, woraus hervorgeht, dass das PA6 in HFIP unlöslich und vollständig vernetzt war. Man erhielt 0,98 g als Feststoff.

Die Kristallinität wurde durch DSC Messung mit dem Gerät Q 2000 der Firma Waters GmbH durchgeführt. Die Einwaage betrug 8,5 mg, die Heiz- bzw. Kühlrate 20 K/min. Gemessen wurde die Probe nach ISO 11357-7. Demnach betrug die Kristallinität 21%.

Der Quellungsgrad (Degree of swelling) des erhaltenen Polyamide betrug 23.

Beispiel 3

6,13 g (54,1 mmol) ε-Caprolactam, 0,065 g (0,357 mmol) N-(2-Oxo-azepan-3-yl)-propenamid und 0,9 g (1,127 mmol) Bruggolen® C 10 (17% w/w ε-Caprolactamat in ε-Caprolactam) wurden in den Reaktor bei 140°C gemischt und 0,41 g (0,83 mmol) Bruggolen® C20 (80% w/w blockiertes Diisocyanat in ε-Caprolactam) in das Glasrohr mit Zerschlagventil und bei 140°C temperiert. Nach Erreichen der 140°C wurde das schmelzflüssige Bruggolen® C20 mit Hilfe eines Zerschlagventilsystems in die schmelzflüssige Mischung injiziert und die Polymerisation 20 Minuten stehen gelassen und anschließend durch Abkühlen des Reaktors in Wasser (10°C) gequencht. Man erhielt 7,6 g Polyamid 6 als Feststoff. 1 g des erhaltenen Polymers wurde unter Rühren in 50 ml Hexafluorisopropanol (HFIP) bei Raumtemperatur gegossen. Nach 10 h wurde eine gelartige Struktur erhalten. Nach Filtration wurde das Polymer auf dem Filter zurück gewonnen, wohingegen in dem Filtrat nach Eindampfen kein Polymer nachgewiesen wurde, woraus hervorgeht, dass das PA6 in HFIP unlöslich und vollständig vernetzt war. Man erhielt 0,95 g als Feststoff.

Der Quellungsgrad (Degree of swelling) des erhaltenen Polyamide betrug 54.

Beispiel 4

6,16 g (54,4 mmol) ε-Caprolactam, 0,035 g (0,193 mmol) N-(2-Oxo-azepan-3-yl)-propenamid und 0,9 g (1,127 mmol) Bruggolen® C 10 (17% w/w ε-Caprolactamat in ε-Caprolactam) wurden in den Reaktor bei 140°C gemischt und 0,41 g (0,83 mmol) Bruggolen® C20 (80% w/w blockiertes Diisocyanat in ε-Caprolactam) in das Glasrohr mit Zerschlagventil und bei 140°C temperiert. Nach Erreichen der 140°C wurde das schmelzflüssige Bruggolen® C20 mit Hilfe eines Zerschlagventilsystems in die schmelzflüssige Mischung injiziert und die Polymerisation 20 Minuten stehen gelassen und anschließend durch Abkühlen des Reaktors in Wasser (10°C) gequencht. Man erhielt 7,6 g Polyamid 6 als Feststoff. 1 g des erhaltenen Polymers wurde unter Rühren in 50 ml Hexafluorisopropanol (HFIP) bei Raumtemperatur gegossen. Nach 10 h wurde eine gelartige Struktur erhalten. Nach Filtration wurde das Polymer auf dem Filter nur teilweise zurück gewonnen, woraus hervorgeht, dass das PA6 in HFIP nur teilweise unlöslich und nicht vollständig vernetzt war. Man erhielt 0,85 g als Feststoff.

Vergleichsbeispiel A

Synthese von linearem Polyamid-6

6,2 g ε-Caprolactam (54,8 mmol) und 0,89 g Bruggolen C 10 (1,188 mmol) (Brüggemann Chemical, 17% w/w Na-ε-Caprolactamat in Caprolactam) wurden in den Reaktor eingetragen, wohingegen 0,41 g Bruggolen C20 (0,832 mmol) (Brüggemann Chemical, 80% w/w blockiertes Diisocyanat in ε-Caprolactam) in das Glasrohr mit Zerschlagventil eingetragen wurden. Nach Einpendeln des Systems auf die Polymerisationstemperatur wurde das schmelzflüssige C20 durch das Zerschlagventil in die schmelzflüssige Katalysator/Monomer-Mischung injiziert und die Polymerisation 20 Minuten fortschreiten gelassen. Die Polymerisation wurde durch Abkühlen des Reaktors in Wasser (10°C) gequencht. Es wurden 7,4 g Polyamid-6 gewonnen (100% der zugegebenen Ausgangsstoffe). 1 g des erhaltenen Polymers wurde unter Rühren in 50 mL Hexafluorisopropanol (HFIP) bei Raumtemperatur gegossen. Nach 5 Minuten wurde die Lösung transparent und homogen. Nach Filtration wurde das Polymer durch Entfernung des Lösungsmittels bis zur Gewichtskonstanz vollständig aus dem Filtrat zurück gewonnen, woraus hervorgeht, daß das lineare PA6 vollständig in HFIP löslich war.

Vergleichsbeispiel B

Synthese von linearem Polyamid-6

Es wird die folgende repräsentative Synthesemethode für die anionische Polymerisation von ε-Caprolactam verwendet: 7,1 g ε-Caprolactam (62,7 mmol) und 0,3 g Bruggolen C 10 (0,40 mmol) (Brüggemann Chemical, 17% w/w Na-ε-Caprolactamat in Caprolactam), was 0,6% mol/mol Caprolactam entsprach, wurden in den Reaktor eingetragen, wohingegen 0,1 g Brugolen C20 (0,24 mmol) (Brüggemann Chemical, 80% w/w blockiertes Diisocyanat in ε-Caprolactam), was 0,3% mol/mol Caprolactam entsprach, in das Glasrohr mit Zerschlagventil eingetragen wurden. Nach Einpendeln des Systems auf die Polymerisationstemperatur wurde das schmelzflüssige C20 durch das Zerschlagventil in die schmelzflüssige Katalysator/MonomerMischung injiziert und die Polymerisation 20 Minuten fortschreiten gelassen. Die Polymerisation wurde durch Abkühlen des Reaktors in Wasser (10°C) gequencht.
Es wurden 7,5 g Polyamid-6 gewonnen (100% der zugegebenen Ausgangsstoffe). 1 g des erhaltenen Polymers wurde unter Rühren in 50 mL Hexafluorisopropanol (HFIP) bei Raumtemperatur gegossen. Nach 5 Minuten wurde die Lösung transparent und homogen. Nach Filtration wurde das Polymer durch Entfernung des Lösungsmittels bis zur Gewichtskonstanz vollständig aus dem Filtrat zurück gewonnen; woraus hervorgeht, dass das lineare PA6 vollständig in HFIP löslich war.

Vergleichsbeispiel C

Synthese von linearem Polyamid-6

Siehe Macromolecules, Band 32, Nr. 23 (1999), 7726: Bsp. PCL 9, S. 7727

Das Vergleichsbeispiel B wurde mit Polymerisation bei 155°C wiederholt; das resultirende Polymer war immer noch löslich.

Quellungstest von vernetztem PA6

Der Quellungszustand des vernetzten PA6 wurde durch den Gleichgewichts-Quellungsgrad Q charakterisiert. Q ist definiert als der Quotient des (gequollenen) Endvolumens $V_f$ in HFIP und dem (kollabierten) Anfangsvolumen $V_i$ und kann gemäß Gl. 1 auch als der Quotient der Gewichtsanteile des Netzwerks im Anfangs- und Endgel, $m_i$ bzw. $m_f$, angegeben werden, wobei $\rho_{HFIP}$ (=1,452 g/mL) und $\rho_{PA6}$ (1,14 g/mL) für die Dichte des Lösungsmittels bzw. des durch anionische Polymerisation erhaltenen linearen PA6 stehen.

$$Q = V_f/V_i = 1 + (m_f/m_i - 1)(\rho PA6 / \rho HFIP) \qquad \text{Gl. (1)}$$

**Patentansprüche**

1. Verfahren zur Quervernetzung von Polyamiden, welches **dadurch gekennzeichnet ist, dass** man eine Verbindung der allgemeinen Formel $R^1R^2C=CR^3$-X, in der $R^1$, $R^2$ und $R^3$ unabhängig voneinander für Wasserstoff oder einen organischen Rest steht, und wobei X für einen Rest ausgewählt aus der Gruppe enthaltend -NC=O, -COCl, -COBr, - COOH, Carbonsäureanhydrid und -COOR$^4$ steht, wobei R$^4$ für $C_1$- bis $C_{12}$-Alkyl steht, mit einem Lactam A bei einer Temperatur von (-30) bis 150°C und einem Druck von 0,1 bis 10 bar in einem Lösungsmittel A umsetzt und anschließend das erhaltene Umsetzungsprodukt mit einem Lactam B, einem Katalysator und einem Aktivator bei einer Temperatur von 40 bis 240°C und einem Druck von 0,1 bis 10 bar umsetzt.

2. Verfahren zur Quervernetzung von Polyamid nach Anspruch 1, **dadurch gekennzeichnet, dass** man eine Verbindung der allgemeinen Formel $R^1R^2C=CR^3$-X, mit einem Lactam A bei einer Temperatur von 0 bis 80°C umsetzt und anschließend das erhaltene Umsetzungsprodukt mit einem Lactam B, einem Katalysator und einem Aktivator bei einer Temperatur von 70 bis 180°C umsetzt.

3. Verfahren zur Quervernetzung von Polyamid nach Anspruch 1, **dadurch gekennzeichnet, dass** man eine Verbindung der allgemeinen Formel $R^1R^2C=CR^3$-X, mit einem Lactam A bei einer Temperatur von 20 bis 50°C umsetzt und anschließend das erhaltene Umsetzungsprodukt mit einem Lactam B, einem Katalysator und einem Aktivator bei einer Temperatur von 100 bis 170°C umsetzt

4. Verfahren zur Quervernetzung von Polyamid nach Anspruch 1, **dadurch gekennzeichnet, dass** das Molverhältnis von Verbindung der allgemeinen Formel $R^1R^2C=CR^3$-X zum Lactam A 0,01:1 bis 100:1 beträgt.

5. Verfahren zur Quervernetzung von Polyamid nach Anspruch 1, **dadurch gekennzeichnet, dass** das Molverhältnis vom Lösungsmittel A zur Verbindung der allgemeinen Formel $R^1R^2C=CR^3$-X 200:1 bis 0:1 beträgt.

6. Verfahren zur Quervernetzung von Polyamid nach Anspruch 1, **dadurch gekennzeichnet, dass** das Molverhältnis vom Lösungsmittel A zum Lactam A 200:1 bis 0,5:1 beträgt.

7. Verfahren zur Quervernetzung von Polyamid nach Anspruch 1, **dadurch gekennzeichnet, dass** das Molverhältnis Lactam B zum Lactam A 1:1 bis 10.000:1 beträgt.

8. Verfahren zur Quervernetzung von Polyamid nach Anspruch 1, **dadurch gekennzeichnet, dass** das Molverhältnis von Lactam B zum Katalysator 1 : 1 bis 10000 : 1 beträgt.

9. Verfahren zur Quervernetzung von Polyamid nach Anspruch 1, **dadurch gekennzeichnet, dass** das Molverhältnis von Aktivator zum Katalysator 0,01 : 1 bis 10 : 1 beträgt.

10. Verfahren zur Quervernetzung von Polyamid nach Anspruch 1, **dadurch gekennzeichnet, dass** das Lösungsmittel A ausgewählt ist aus der Gruppe bestehend aus Dimethylsulfoxid, Methylchlorid, Methylenchlorid, Dioxan, Tetrahydrofuran, Acetonitril, Chloroform, Tetrahydropyran, N-Methylpyrrolidon, N-Ethylpyrrolidon, Dimethylformamid, Caprolactam, Lauryllactam, Methanol, Ethanol, n-Propanol, iso-Propanol und deren Gemischen.

**Claims**

1. A process for crosslinking polyamides, which comprises reacting a compound of the general formula $R^1R^2C=CR^3$-X in which $R^1$, $R^2$ and $R^3$ are each independently hydrogen or an organic radical, and where X is a radical selected from the group comprising -NC = O, -COCl, -COBr, -COOH, carboxylic anhydride and -COOR$^4$ where R$^4$ is $C_1$- to $C_{12}$- alkyl, with a lactam A at a temperature of (-30) to 150°C and a pressure of 0.1 to 10 bar in a solvent A and then reacting the resulting reaction product with a lactam B, a catalyst and an activator at a temperature of 40 to 240°C and a pressure of 0.1 to 10 bar.

2. The process for crosslinking polyamide according to claim 1, wherein a compound of the general formula $R^1R^2C=CR^3$-X is reacted with a lactam A at a temperature of 0 to 80°C, and then the resulting reaction product is reacted with a lactam B, a catalyst and an activator at a temperature of 70 to 180°C.

3. The process for crosslinking polyamide according to claim 1, wherein a compound of the general formula $R^1R^2C=CR^3$-X is reacted with a lactam A at a temperature of 20 to 50°C, and then the resulting reaction product is reacted with a lactam B, a catalyst and an activator at a temperature of 100 to 170°C.

4. The process for crosslinking polyamide according to claim 1, wherein the molar ratio of the compound of the general formula $R^1R^2C=CR^3$-X to the lactam A is 0.01:1 to 100:1.

5. The process for crosslinking polyamide according to claim 1, wherein the molar ratio of the solvent A to the compound of the general formula R$^1$R$^2$C=CR$^3$-X is 200:1 to 0:1.

6. The process for crosslinking polyamide according to claim 1, wherein the molar ratio of the solvent A to the lactam A is 200:1 to 0.5:1.

7. The process for crosslinking polyamide according to claim 1, wherein the molar ratio of lactam B to lactam A is 1:1 to 10 000:1.

8. The process for crosslinking polyamide according to claim 1, wherein the molar ratio of lactam B to the catalyst is 1:1 to 10 000:1.

9. The process for crosslinking polyamide according to claim 1, wherein the molar ratio of activator to the catalyst is 0.01:1 to 10:1.

10. The process for crosslinking polyamide according to claim 1, wherein the solvent A is selected from the group consisting of dimethyl sulfoxide, methyl chloride, methylene chloride, dioxane, tetrahydrofuran, acetonitrile, chloroform, tetrahydropyran, N-methylpyrrolidone, N-ethylpyrrolidone, dimethylformamide, caprolactam, lauryllactam, methanol, ethanol, n-propanol, isopropanol and mixtures thereof.

**Revendications**

1. Procédé pour la réticulation de polyamides qui est **caractérisé en ce qu'**on transforme un composé de formule générale R$^1$R$^2$C=CR$^3$-X, dans laquelle R$^1$, R$^2$ et R$^3$ représentent, indépendamment les uns des autres, hydrogène ou un radical organique et X représentant un radical choisi dans le groupe contenant -NC=O, -COCl, -COBr, -COOH, anhydride d'acide carboxylique et -COOR$^4$, R$^4$ représentant alkyle en C$_1$ à C$_{12}$, avec un lactame A à une température de (-30) à 150°C et une pression de 0,1 à 10 bars dans un solvant A puis on transforme le produit de transformation obtenu avec un lactame B, un catalyseur et un activateur à une température de 40 à 240°C et une pression de 0,1 à 10 bars.

2. Procédé pour la réticulation de polyamide selon la revendication 1, **caractérisé en ce qu'**on transforme un composé de formule générale R$^1$R$^2$C=CR$^3$-X avec un lactame A à une température de 0 à 80°C puis on transforme le produit de transformation obtenu avec un lactame B, un catalyseur et un activateur à une température de 70 à 180°C.

3. Procédé pour la réticulation de polyamide selon la revendication 1, **caractérisé en ce qu'**on transforme un composé de formule générale R$^1$R$^2$C=CR$^3$-X avec un lactame A à une température de 20 à 50°C puis on transforme le produit de transformation obtenu avec un lactame B, un catalyseur et un activateur à une température de 100 à 170°C.

4. Procédé pour la réticulation de polyamide selon la revendication 1, **caractérisé en ce que** le rapport molaire du composé de formule générale R$^1$R$^2$C=CR$^3$-X au lactame A vaut 0,01:1 à 100:1.

5. Procédé pour la réticulation de polyamide selon la revendication 1, **caractérisé en ce que** le rapport molaire du solvant A au composé de formule générale R$^1$R$^2$C=CR$^3$-X vaut 200:1 à 0:1.

6. Procédé pour la réticulation de polyamide selon la revendication 1, **caractérisé en ce que** le rapport molaire du solvant A au lactame A vaut 200:1 à 0,5:1.

7. Procédé pour la réticulation de polyamide selon la revendication 1, **caractérisé en ce que** le rapport molaire du lactame B au lactame A vaut 1:1 à 10 000:1.

8. Procédé pour la réticulation de polyamide selon la revendication 1, **caractérisé en ce que** le rapport molaire du lactame B au catalyseur vaut 1:1 à 10 000:1.

9. Procédé pour la réticulation de polyamide selon la revendication 1, **caractérisé en ce que** le rapport molaire de l'activateur au catalyseur vaut 0,01:1 à 10:1.

10. Procédé pour la réticulation de polyamide selon la revendication 1, **caractérisé en ce que** le solvant A est choisi dans le groupe constitué par le diméthylsulfoxyde, le chlorure de méthyle, le chlorure de méthylène, le dioxane, le tétrahydrofuranne, l'acétonitrile, le chloroforme, le tétrahydropyrane, la N-méthylpyrrolidone, la N-éthylpyrrolidone, le diméthylformamide, le caprolactame, le lauryllactame, le méthanol, l'éthanol, le n-propanol, l'iso-propanol et leurs mélanges.

**IN DER BESCHREIBUNG AUFGEFÜHRTE DOKUMENTE**

**In der Beschreibung aufgeführte Patentdokumente**

- DE 1420241 A

- WO 2005123669 A

**In der Beschreibung aufgeführte Nicht-Patentliteratur**

- Polyamide, Kunststoff Handbuch. Carl Hanser Verlag, 1998, vol. ¾, 49-52
- *Macromolecules,* 1999, vol. 32 (23), 7726

- **CHARLESBY, A.** *Nature,* 1953, vol. 171, 167
- **DEELEY, C. W. ; WOODWARD, A.E. ; SAUER, J.A.** *J. Appl. Phys.,* 1957, vol. 28, 1124-1130